# EUROPEAN PATENT APPLICATION

(11) **EP 4 439 385 A1**
(43) Date of publication of application: **02.10.2024**
(21) Application number: 23220874.4
(22) Date of filing: 30.12.2023
(51) Int. Cl.: G06N 3/02, G06N 3/08, G06N 20/00, G06Q 10/087, G06Q 10/10, G06Q 30/0202, G06Q 30/0201, G06Q 50/04

(54) **ITEM MARKDOWN OPTIMIZER**

(30) Priority: 31.03.2023 US 202318129445
(71) Applicant: NCR Voyix Corporation, Atlanta, GA 30308 (US)
(72) Inventor: LASERSON, Itamar David, 5405602 Givat Shmuel (IL); TRUJILLO, Norman Leonard, Frisco, 75034 (US)
(74) Representative: Secerna LLP

(57) **Abstract**

A system and methods for fine-grain predictive guidance for item markdowns are provided. The predictive guidance indicates whether an item should or should not be marked down, a markdown level for any markdown, a total number of units for any markdown, a time duration for any markdown, a store location to place an item associated with the markdown, and a listing of customers who are likely to purchase a marked down item when provided a targeted promotion. The predictive guidance utilizes, as input, the output produced by multiple predictive services and weighs those respective outputs to optimize item markdown sales and overall sales of the store.

## Description

One of the largest causes for shrink in retail is spoilage, i.e., perishable items that have exceeded their expiration dates. Retailers apply price markdowns as a primary technique to move at-risk inventory before spoilage occurs. Current solutions in the industry focus on the operational aspect of markdowns referred to as "reduce to clear," rather than the decision-making aspect of inventory optimization. For example, retailers depend on store walk-throughs to manually identify inventory at risk.

Spoilage-based shrink accounts for approximately 3.1 % of retail shrink overall. Departments most impacted by spoilage typically include produce, deli, bakery, prepared foods, seafood, and meat. Margins are thin for grocery stores, such that any reduction in spoilage-based shrink can substantially improve store profitability. Unfortunately, current approaches rely almost exclusively on predefined markdown policies and the experience/discretion of workers, which is not flexible, sustainable, or optimal.

In a first aspect of the present invention, there is provided a method, comprising: obtaining an item identifier for an item that is a candidate for an item markdown within a store; providing the item identifier to a machine-learning model (MLM); receiving a markdown level for the item and a total number of units of the item to markdown as output from the MLM based on the MLM determining that the item is to be marked down; obtaining a predicted number of future transactions that are likely to include the item without any markdown of the item; obtaining a predicted number of customers for the future transactions who are not likely to purchase the item without the markdown but who are likely to purchase the item with the item markdown; and providing a recommendation with recommendation details as to whether to markdown the item based on the the markdown level, the total number of item units, and the predicted number of the future transactions likely to include the item without any markdown.

In a further aspect of the present invention, there is provided a method, comprising: obtaining an item identifier for an item that is a candidate for an item markdown within a store; providing the item identifier to a machine-learning model (MLM); receiving a markdown level for the item and a total number of units of the item to markdown as output from the MLM based on the MLM determining that the item is to be marked down; obtaining a predicted number of future transactions that are likely to include the item without any markdown of the item; obtaining a predicted number of customers for the future transactions who are not likely to purchase the item without the markdown but who are likely to purchase the item with the item markdown; and providing a recommendation with recommendation details as to whether to markdown the item based on the markdown level, the total number of item units, and the predicted number of the future transactions likely to include the item without any markdown.

In some embodiments, the method further comprises: obtaining a predicted number of first sales for one or more second items when the item is purchased in the future transactions and a predicted number of second sales for one or more third items when the item is purchased in the future transactions; and providing the recommendation with recommendation details the predicted number of the customers likely to purchase the item with the markdown, the predicted number of the first sales, and the predicted number of the second sales.

In some embodiments, the method further comprises: iterating to the obtaining for a next item identifier associated with a next item in a list of item identifiers received from the store until a last item identifier for a last item is processed by the method.

In some embodiments, iterating further includes generating a report that includes each item identifier, the corresponding recommendation, and the corresponding recommendation details.

In some embodiments, obtaining the item identifier further includes receiving the item identifier from a scan performed on a barcode for the item at the store or receiving the item identifier as input received from a user at a user-operated device.

In some embodiments, receiving further includes obtaining a markdown duration as additional output from the MLM.

In some embodiments, obtaining the predicted number of the future transactions that are likely to include the item without any markdown further includes providing the item identifier, the markdown level, the total number of item units, and the markdown duration as input to an exploitation predictor and receiving the predicted number of the future transactions as output from the exploitation predictor.

In some embodiments, obtaining the predicted number of the customers further includes providing the item identifier, the markdown level, the total number of item units, and the markdown duration as input to an exploration predictor and receiving the predicted number of the customers as output from the exploration predictor.

In some embodiments, providing the item identifier to the exploration predictor further includes receiving a customer list of customer identifiers associated with the customers as additional output from the exploration predictor.

In some embodiments, obtaining the predicted number of the first sales further includes providing the item identifier, the markdown level, the total number of item units, and the markdown duration as input to an item affinity analyzer and receiving as output the first sales for the second items and the second sales for the third items.

In some embodiments, providing the recommendation further includes obtaining a planogram for the store.

In some embodiments, providing the recommendation further includes providing the markdown level, the total number of item units, the markdown duration, the planogram, the predicted number of the future transaction that are likely to include the item without the markdown, the predicted number of the customers, the predicted number of the first sales, and the predicted number of the second sales as input to a second MLM and receiving the recommendation and recommendation details as output from the second MLM.

In some embodiments, receiving the recommendation and recommendation details further includes providing the recommendation details as an indication to markdown the item, the markdown level, the markdown duration, a location to display the item within the store, and the customer list of the customer identifiers.

In a further aspect of the present invention, there is provided a method, comprising: obtaining an item identifier for an item of a store; obtaining a planogram for the store; processing a markdown machine learning model (MLM), an exploitation predictor, an exploration predictor, and an item affinity analyzer based on the item identifier; providing the item identifier, the planogram, and output obtained from the processing as input to a second MLM; receiving recommendation details with respect to marking down the item as output from the second MLM; and providing the recommendation details to one or more of a store workflow, a store application, a user application, or a store system.

In some embodiments, the method further comprises: processing the method as a software-as-a-service to the store workflow, the store application, the user application, and the store system through an application programming interface.

In some embodiments, obtaining the item identifier further includes receiving the item identifier from an item markdown workflow-initiated call made to the method from a store-operated device or a user-operated device.

In some embodiments, obtaining identifier further includes receiving the item identifier in response to a user operating a store device and inputting the item identifier into a user interface or scanning the item identifier using a camera or scanner associated with the store device.

In some embodiments, obtaining the item identifier further includes receiving the item identifier in response to a user operating a store device and inputting the item identifier into a user interface or scanning the item identifier using a camera or scanner associated with the store device.

In some embodiments, processing further includes receiving the output as a markdown level for the item, a markdown duration, a total number of units of the item to markdown, a predicted number of customers who are likely to purchase the item without any markdown, a predicted number of customers who are unlikely to purchase the item but are likely to purchase the item with the markdown, a list of the customers who are likely to purchase the item with the markdown, predicted first sales for first items when the item is marked down, and predicted second sales for second items when the item is marked down.

In some embodiments, providing the recommendation details further includes providing the recommendation details as an indication that the item should be marked down, the markdown level, the markdown duration, the total number of units, a store location to display the item during the markdown duration, and the customer list to send each of the customers associated with the customer list a targeted promotion for the markdown of the item.

In a yet further aspect of the present invention, there is provided a system comprising: a cloud server comprising at least one processor and a non-transitory computer-readable storage medium, the non-transitory computer-readable storage medium comprising executable instructions, wherein the executable instructions, when executed by the at least one processor cause the at least one processor to perform operations comprising: obtaining an item identifier for an item of a store to determine whether the item should be marked down in price; processing a markdown machine learning model (MLM), an exploitation predictor, an exploration predictor, and an item affinity analyzer based on the item identifier; providing output from the processing as input to a second MLM; receiving as output from the second MLM recommendation details for the item, wherein the recommendation details comprising an indication that the item should be marked down, a markdown level for the item, a total number of item units to markdown, a markdown duration, and a store location to display the item during the markdown duration, wherein receiving further include optionally receiving with the output a customer list of customer identifiers who are likely to purchase the item marked down when provided a targeted promotion for the markdown level on the item; and integrating the recommendation details into an item markdown workflow associated with store interfaces, applications, and systems.

In various embodiments, a system and methods for optimizing item markdowns to reduce loss of perishable items while maximizing overall item sales are presented. Outputs provided by predictive-based applications and at least one machine-learning module are provided as input to an item markdown optimizer. The optimizer weighs the output for a suggested item markdown for purposes of producing as output an optimal recommendation for the suggested item markdown. The optimal recommendation includes an indication as to whether the overall impact on store sales are likely to increase or decrease when a suggested item is marked down. When the indication is that the overall sales are likely to increase, the optimal recommendation further includes an item markdown level, a total number of item units to markdown, a duration of the markdown, a store location to display the item to maximize overall sales of the item and other items of the store, and a listing of customers that were not likely to purchase the item but are likely to purchase the item with the markdown if provided a targeted promotion from the store for the item.
FIG. 1 is a diagram of a system for optimizing item markdowns to reduce loss of perishable items while maximizing overall item sales, according to an example embodiment.
FIG. 2A is a flow diagram of a method for optimizing item markdowns to reduce loss of perishable items while maximizing overall item sales, according to an example embodiment.
FIG. 2B is a flow diagram of additional embodiments for the method of FIG. 2A.
FIG. 3 is a flow diagram of another method for optimizing item markdowns to reduce loss of perishable items while maximizing overall item sales, according to an example embodiment.

Item markdowns processes bring value to retailers by increasing sales of soon-to-be-expired items that have otherwise been wasted. However, the value is diminished in scenarios where the shoppers purchased a mark-down item as a replacement or a similar non-marked-down item that they originally intended to purchase in full price. In such situation, the overall units sold for the retailer is not impacted. Yet, the retailer category sales become lower because of the mark-down discount. In such cases, the item expiration problem is only delayed since other items of the same time will bot be cleared from the retailer's shelf and will unavoidably need to be marked down as they get closer to their expiration dates.

For example, if cottage cheese is marked down, and a customer purchases it instead of cottage cheese of a different brand, the retailer will only be negatively impacted from this markdown. The customer will buy a discounted item instead of the full-price item they intended to buy.

In fact, markdowns only bring value to retailers in the following scenarios. First, as a result of the markdown item, the shopper purchased more items of the same kind than they originally intended to purchase. For example, if the shopper intended to by 1 lb. of yellow cheese but as a result of the markdown, they decided to purchase 2 lbs. Being able to predict when shoppers will buy more units of the discounted item, or an associated non-marked-down item are valuable insights when establishing a store markdown strategy. Second, as a result of the markdown item, the shopper purchases items based on value and associated items to complete a recipe. For example, if the shopper did not intend to buy mozzarella cheese but as a result of the markdown, they decided to purchase it and also purchased tomato sauce and olives to make a pizza. Hence, increasing incremental sales and optimizing markdown items.

Current approaches to markdown decisions fail to correlate data and analyze store captured data from multiple systems of the store for purposes of accounting for item cannibalization and halo effects. That is, items of the store have affinities with one another such that when some items are sold in greater volume, other similar items are sold in lesser volumes (i.e., cannibalization affect) and such that when some items are purchased, other complementary items are also sold (i.e., halo affect).

Moreover, current approaches to markdown decisions fail to account for customers that are likely to purchase a marked down item even if the item were not marked down at all. These customers are not going to be influenced to purchase a marked down item when they are expected to purchase the item even when it is not marked down. Thus, these types of customers should be accounted for when determining whether any given item should or should not be marked down by a store.

Still further, current approaches to markdown decisions fail to account for customers that were not likely to purchase item but are likely to be influenced to purchase the item when the item is marked down. These customers are the type of customers that should be identified and targeted for any marked down item of a retailer.

A variety of analytical and projection-based technologies existing in the industry for which retailers use for a variety of reasons. For instance, exploration-based technologies predict how well a discount or promotion on an item will convert customers to purchase the item when they did not originally intend to purchase it. Exploitation-based technologies predict how many baskets or transactions are likely to add a promotion-based item even if the promotion is not provided. Item affinity-based technologies identify related items to a given item and classify the related items as having cannibalization affects or halo affects to the given item. These technologies are often used for different purposes of the retailer related to promotion campaigns and are not typically used in connection with determining marked down items associated with perishable shrink. Moreover, the technologies are not utilized in combination with one another within the industry; rather each technology is directed to a specific problem that the retailer is trying to address, such as increasing sales of a given item (e.g., exploration), upselling customers during transaction to buy additional items (e.g., exploitation), and/or suggesting substitute items when a certain item is out of stock (e.g. item affinity).

As will be demonstrated herein and below, the above-discussed deficiencies associated with determining how to optimize item markdowns are solved. For any given item believed to be a candidate for a markdown a first determination is made to identify future transactions likely to purchase the item even if no markdown is provided, a second determination is made to identify customers likely to purchase the item that would not have originally considered purchasing the item without the discount, and a third determination is made on forecasted sales data for related items when the item is marked down to account for overall forecasted sales of the store based on forecasted sales for the item, forecasted sales for cannibalization items and forecasted sales for halo.

The three determinations are weighed and analyzed to determine for a given item that is being suggested for markdown 1) whether the item should or should not be markdown; 2) if the item is suggested for markdown, total number of units of the item to mark down, markdown level for the item, and time duration to offer the mark down on the item; 3) what location within the store is the marked down item to be displayed for purposes of creating an optimal halo affect with related items; and 4) a list of customers who are not likely to purchase the item but who are likely to purchase the item when the item is marked down and offered as a targeted promotion to the corresponding customers.

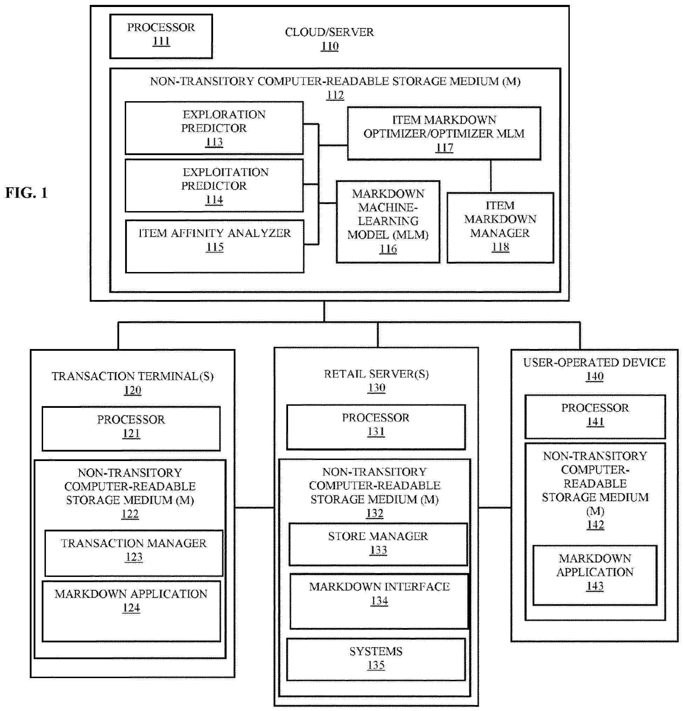

FIG. 1 is a diagram of a system 100 for optimizing item markdowns to reduce loss of perishable items while maximizing overall item sales, according to an example embodiment. It is to be noted that the components are shown schematically in greatly simplified form, with only those components relevant to understanding of the embodiments being illustrated.

Furthermore, the various components (that are identified in FIG. 1) are illustrated and the arrangement of the components is presented for purposes of illustration only. It is to be noted that other arrangements with more or less components are possible without departing from the teachings of optimizing item markdowns to reduce loss of perishable items while maximizing overall item sales presented herein and below.

System 100 is data-driven and provides real-time and dynamic optimized markdown predictions and instructions for marking down items of a store. The predictions and instructions are integrated into existing workflows, existing services, existing interfaces, and existing systems as data-driven enhancements to markdown processes.

System 100 includes a cloud 110 or a server 110 (hereinafter simply "cloud 110"), transaction terminals 120, retail servers 130, and user-operated devices 140. Cloud 110 includes a processor 111 and a non-transitory computer-readable storage medium 112, which includes executable instructions for a an exploration predictor 113, an exploitation predictor 114, an item affinity analyzer 115, a markdown machine learning model (MLM) 116, an item markdown optimizer/MLM 117, and an item markdown manager 118. Processor 111 obtains or is provided the executable instructions from medium 112 causing processor 111 to perform operations discussed herein and below with respect to 113-118.

Each transaction terminal 120 includes a processor 121 and a non-transitory computer-readable storage medium 122, which includes executable instructions for a transaction manager 123 and a markdown application 124. Processor 121 obtains or is provided the executable instructions from medium 122 causing processor 121 to perform operations discussed herein and below with respect to 123-124.

Each retailer server 130 includes a processor 131 and a non-transitory computer-readable storage medium 132, which includes executable instructions for a store manager 133, a markdown interface 134, and a variety of systems 135. Processor 131 obtains or is provided the executable instructions from medium 132 causing processor 131 to perform operations discussed herein and below with respect to 133-135.

Each user-operated device 140 includes a processor 141 and a non-transitory computer-readable storage medium 142, which includes executable instructions for a markdown application (app) 143. Processor 141 obtains or is provided the executable instructions from medium 142 causing processor 141 to perform operations discussed herein and below with respect to 143.

Initially, markdown MLM 116 is trained on per item basis from a variety of data collected for a given store of a retailer. For example, a listing of perishable items for the store that is subject to spoilage/shrink when the items fail to sell before their expiration dates; the listing is obtained from an item catalogue of the store which is available through systems 135. Each item is identified by item type. The MLM 116 is trained on first features which are provided as output from exploration predictor 113, exploitation predictor 114, and affinity analyzer 115.

The training data includes historical data collected for the store over a given interval of time (e.g., a week, a day, a few days, two weeks, etc.) from systems 135. For each interval of time, certain data is obtained from the historical data, such as a total number of items of the given item type (hereinafter referred to a "units of the item") available for sale at the store. The available units for the current interval of time can be obtained from historical data associated with the retailer's inventory system 135 and transaction system 135. The available units in the corresponding training data set for the current interval of time are identified as a first labeled input feature to MLM 116.

Also for the current interval of time, the expiration date for each unit, which is obtained from an inventory system 135 when the item unit was scanned into inventory at the store. The expiration date data for the current interval of time is retained within the corresponding training data set as a second labeled input feature to MLM 116.

The number of days until the expiration date for a given unit. The number of days until expiration for each unit of item within the current interval of time is retained as a third labeled input feature to MLM 116.

For the current interval of time, the number of units for a given item that are already marked down from their original listed price is identified from the store's inventory and/or transaction systems 135 which is where price changes would appear for the item. The total number of units already marked down in the current interval of time is retained as a fourth labeled input feature to MLM 116. The total number of markdown cycles active for the units is also determined based on the markdown levels identified for the units of the given item type present in the current interval of time, and this may be retained, along with the current interval of time, as a fifth labeled input feature to MLM 116. The original price of each unit may also be identified from the historical data and retained, along with the current interval of time, as a sixth labeled input feature to MLM 116.

Next, for each current interval of time, sales data associated with each unit, and broken down by that unit's markdown levels (e.g., markdown cycles) for a given day and a given item, is obtained from the transaction system 135. This is retained, along with the current interval of time, within the corresponding training data set as a seventh labeled input feature to MLM 116.

Spoilage per day for a given item type is calculated as an eighth labeled input feature to MLM 116. This can be calculated based on units that expired before a sale of the units occurred, from the historical data of the transaction system 135. This spoilage per day per item type data is retained as a ninth labeled input feature to MLM 116. A shrink reduction for the given item type is calculated based on items that sold in a markdown cycle before expiration and this s retained as a tenth labeled input feature to MLM 116.

Data relating to similar or complementary items to a given item of a given item type are obtained from item affinity analyzer 115. The item affinity analyzer leverages multiple data sources including the item catalogue system 135, transaction system 135, and/or inventory system 135. Item identifiers for the similar or complementary items are retained as eleventh labeled input features to MLM 116.

Historical forecasted demand/sales for the item are obtained from the retailer's forecasting system 135. This is retained as a twelfth labeled input feature.

The training data sets for each item may include the aforementioned twelve labeled input features across multiple intervals of time. In example embodiments, the expected output from the MLM 114 when provided an item's training data set may include a set of markdown parameters including a type of markdown (markdown level and/or markdown amount) and a quantity of units of the item to markdown. The markdown parameters may be optimized to reduce item shrink, increase item margins, and/or increase item sales. In some embodiments, when a threshold F1 score is attained by MLM 116 - which may be reflected in decreased item shrink, increased item margins, and/or increase item sales - MLM 114 is released for production use by item markdown optimizer/optimizer MLM 117. In an example embodiment, output from MLM 116 includes, per item, a predicted markdown level or markdown discount for a given item and a total quantity of the item to markdown on a given day within a store.

Next, item markdown optimizer/optimizer MLM 117 is trained using the output predictions, per item, from markdown MLM 116 and using output provided from the exploration predictor 113, exploitation predictor 114, and item affinity analyzer 115. The predicted output for an item's markdown level, total number of units to markdown, and markdown duration are provided as input to the exploration predictor 113, the exploitation predictor 114, and the item affinity analyzer. The exploration predictor 113 returns as output a listing of customer identifiers that were not likely to purchase a given item but are likely to purchase the item on the markdown. The exploitation predictor 114 returns as output a total number of baskets or transactions likely to add the marked down item for purchase even if the item were not marked down. The item affinity analyzer 115 returns as output a a first listing of items that are complementary with the item (i.e., halo affect) and a second listing of items that are non-complementary with the item (i.e., cannibalization affect).

Item markdown optimizer/optimizer MLM 117 receives the outputs provided by 113-116 as input and determines 1) whether the item should or should not be marked down; 2) if the item is to be marked down, the total number of units to mark down, a mark down level, and a time duration for the item mark down; 3) where the item should be placed in the store when marked down to maximize its halo affect on similar items; and 4) a listing of customers likely to purchase the item when marked down and when provided a target promotion for the mark down.

In an embodiment, the markdown optimizer/optimizer MLM 117 also receives as input a planogram for the store. The planogram provides a physical diagram of the store include store egress and ingress points, terminal locations, shelf locations, department locations, display locations, item locations on the shelves, and item locations in displays. This information is used by markdown optimizer/optimizer MLM 117 for identifying halo affect item locations and cannibalization affect item locations to a given item's location within the store relative to each other. The further away the item is placed within the store from the cannibalization items and the closer the item is placed within the store to the halo items the better sales will be for the store on the marked down item.

The item markdown optimizer/optimizer MLM 117 weighs the output from 113-116 for purposes of optimizing sales when items are to be marked down. For example, the higher the total number of baskets or transactions are from the output of the exploitation predictor 114, the less likely a given item should be marked down since that item was likely to be purchased regardless of any markdown. As another example, the higher total number of customers returned as output from the exploration predictor 113, the more likely the item to be marked down is going to have successful sales that it would not otherwise have experienced without the mark down. Output from the affinity predictor 115 which includes higher cannibalization affect compared to halo affect indicates the item to be marked down is likely not going to increase sales whereas higher halo affect relative to the cannibalization affect indicates the item to be marked down is likely to increase overall sales of the store.

The item markdown optimizer/optimizer MLM 117 is implemented as a heuristic-based algorithm, a trained MLM, or a combination of both a heuristic algorithm and an MLM. Actual observed sales of the store following output from the item markdown optimizer/optimizer MLM 117 can be recorded and used as feedback to increase the accuracy of the item markdown optimizer/optimizer MLM 117 over time.

In an embodiment, one of more of exploration predictor 113, exploitation predictor 114, and item affinity analyzer 116 are MLMs. In an embodiment, one or more of exploration predictor 113, exploitation predictor 114, and item affinity analyzer 116 are statistical-based and/or heuristic-based algorithms. In an embodiment, exploration predictor 113, exploitation predictor 114, and item affinity analyzer 116 are any combination of MLMs, statistical-based algorithms, and/or heuristic-based algorithms.

Item markdown manager 118 provides a front-end interface for processing item markdown optimizer/optimizer MLM 117 and integrating the predicted output into application 123, store manager 133, interface 134, systems 135, and application 143. In an embodiment, the item markdown manager 118 integrates output from the item markdown optimizer/optimizer MLM 117 via an application programming interface (API). In an embodiment, the item markdown manager 118 is provided as a software-as-a-service to application 124, manager 133, interface 134, system 135, and markdown application 143.

During operation of system 100, a store associate at the beginning of a business day for the store operates either terminal 120 or device 140 for purposes of identifying the items that are within a predefined time of expiring. This can be done in a variety of manners such as by utilizing an existing workflow associated with an existing markdown process that is enhanced to include markdown app 124 and/or markdown app 143. When a barcode for an item that is within the predefined time of expiring is scanned using a portable scanner or other user-operated device 140, the enhanced workflow sends the item code or item identifier to item markdown manager 118.

Item markdown manager 118 obtains input features for the item and passes the input features as input to MLM 116. The input features for the item can some to some historical period of time (e.g., the prior day). MLM 116 returns an indication whether the given item associated with the item identifier should or should not be marked down, and if a markdown is provided, the MLM 116 also includes a markdown level for the item, a total quantity of units of the item to which to apply the markdown level, and a suggested duration for the marked down item. Item markdown manager 116 also obtains the sales and demand forecast for the item from a forecasting system 135 or a forecasting service used by the store. The sales and demand forecast calculated for the item may be provided as one of the input features to MLM 116. The item identifier and markdown level suggested by MLM 116 is also provided by item markdown manager 118 as input to 113-115. Item markdown manager 118 obtains a planogram associated with the store from store manager 133.

The output from MLM 116, 113-115, and the planogram for the store is provided as input to item markdown optimizer/optimizer MLM 117. Item markdown optimizer/optimizer MLM 117 returns an indication as to whether the item should or should not be marked down, if the item is to be marked down, the markdown level, the total number of item units, and a duration for the markdown are also provided as output by the item markdown optimizer/optimizer MLM 117. When the item is to be marked down, the item markdown optimizer/optimizer MLM 117 also returns as output a physical location to display the marked down item within the store based on the store's planogram and a listing of customer identifiers who when provided a promotion for the markdown level on the item are likely to purchase the marked down item. Item markdown manager 118 returns or integrated the output from the item markdown optimizer/optimizer MLM 117 into application 124, interface 134, systems 135, and/or application 143.

The item codes or identifiers can be entered through a user-interface associated with app 124. For example, a user can scan the items that are within a predefined time of expiring and/or a store associate can walk the department of the store using a laptop 140, phone 140, or handheld scanner 140 to scan the barcodes on the items. Applications 124 and 143 provide each item code to item markdown manager 118. Item markdown manager can maintain current input features for each of the store's perishable items, including sales and demand forecasts, and provides each item's input features as input to MLM 116. MLM 116 returns the indication as to whether the given item should or should not be marked down, and if the item is designated for markdown, the markdown level, the quantity of units for the item, and the duration to which to apply the markdown. Item markdown manager 118 provides the corresponding inputs to 113-115 and provides the outputs from 113-115 and the planogram to item markdown optimizer/optimizer MLM 117. Item markdown manager 118 then returns output from 117 to user interfaces associated with markdown application 124 and markdown application 143.

The above-discussed approach optimally reduces item shrink of perishable items while increasing item margin and overall stores sales through a novel combination of predictive applications 113-117 which are integrated by application 118 into workflows of store-based applications 124 and 143, store interfaces 134, and store systems 135. Because 113-117 are continuously re-trained with actual results, a feedback loop tis established that improves the F1 values and/or accuracy rates of 113-117 for purposes of optimizing the item markdown process, minimizing item spoilage, and increasing individual item sales and overall store sales. Scenarios which result in negative shopping behavior influenced by the markdown process manifests as decreased sales, decreased margins, increased spoilage, and/or decreased item sales forecasts, and thus, would be identifiable and addressable by the 113--117. Furthermore, system 100 provides a fine-grain level of recommendations to store systems 135 and store personnel such that individual experience and aptitude becomes irrelevant to successfully optimizing item markdowns within a store.

System 100 replaces static store markdown policies and discretionary managerial oversight with an objective and data-driven approach to item markdowns on a micro level and to sales and margins of a given store on a macro level. System 100 can be fully integrated and provided to retailers as a cloud-based service that enhances the retailers' existing systems 135, workflows, and services.

In an embodiment, an existing markdown service/user interface of a given retailer is enhanced with a workflow that calls item markdown manager 118 for each scanned or entered item code. The user interface is further enhanced to provide the output described above from item markdown optimizer/optimizer MLM 117.

In an embodiment, markdown interface 134 includes a user interface associated with item markdown manager 118 for purposes of requesting and generating reports on a daily basis for each store of a retailer. The reports can list an item identifier for each item of a given store and list the output produced by item markdown optimizer/optimizer MLM 117 for the corresponding item. Item markdown manager 118 can maintain up-to-date inventory levels for each item of the store using the retailer's store manager 133, inventory system 135, and the store's transaction system 135, which obtains real-time sales data from transaction manager 123 of terminals 120. Interface 134 and/or item markdown manager can further push the daily reports directly to terminals 120 and devices 140 for displaying to store associates via apps 124 and 143. In this way, the conventional approach associated with scanning item identifiers for items that are within a predefined time of expiring can be eliminated or supplemented with the daily store reports.

In an embodiment, Item markdown manager 118 maintains metrics for each item based on its current spoilage, sales, and margin, such that when spoilage is increasing and/or sales and margins decreasing, item markdown manager 118 can initiate a feedback re-training session for MLM 116 and/or item markdown optimizer/optimizer MLM 117. In example embodiments, past input features, associated with item data for a given store and identified subsequent to a last training session, are retained for new training sessions with MLM 116 and/or item markdown optimizer/optimizer MLM 117. A feedback loop is created to maintain the proper acceptable F1 values for MLM 116 and/or item markdown optimizer/optimizer MLM 117 to ensure optimization with respect to reducing spoilage and increasing item margins and overall sales.

In an embodiment, item markdown manager 118 is provided as a software-as-a-service (SaaS) to systems 135 and existing enhanced services of a retailer. In this way, system 100 can be fully integrated into an existing retailer's markdown process via a call (e.g., an application programming interface (API) call) to item markdown manager from these existing systems 135 and services to established enhanced systems 135 and enhanced services for the retailer.

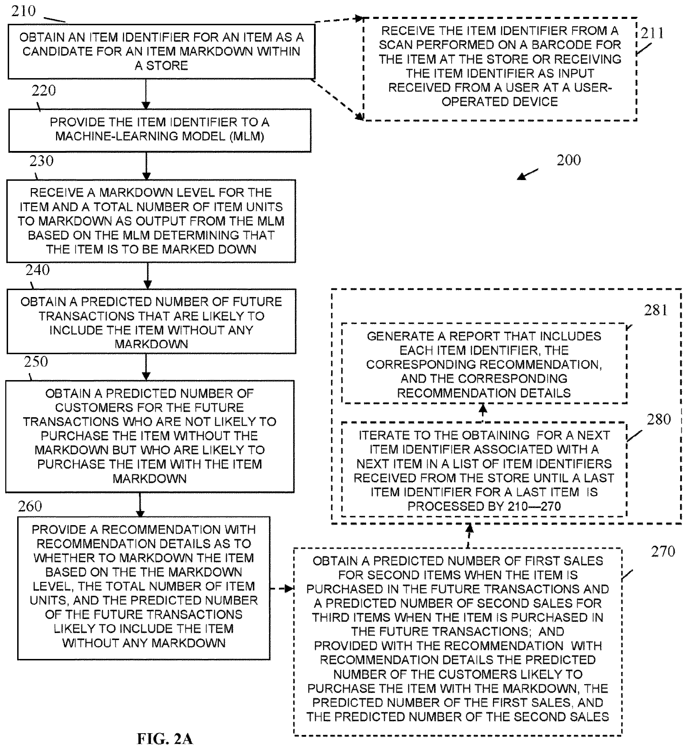

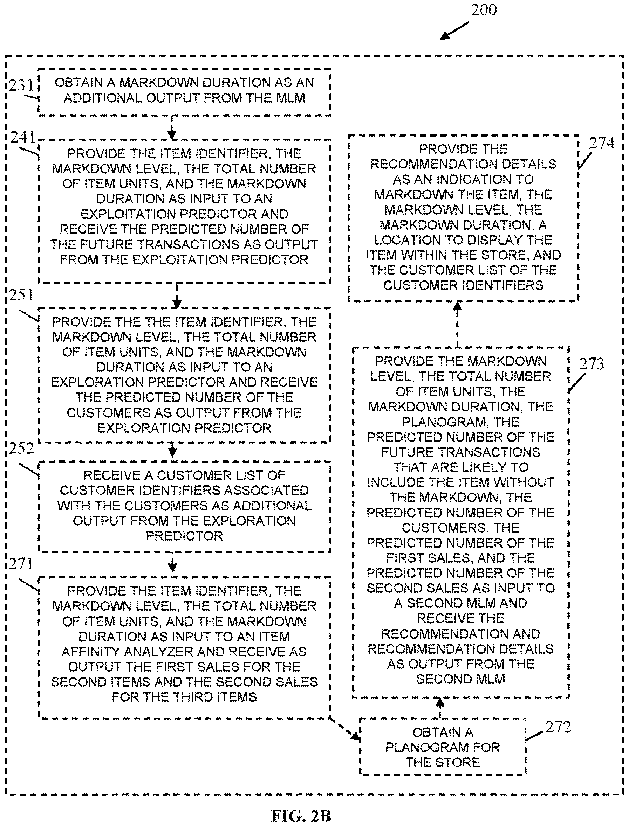

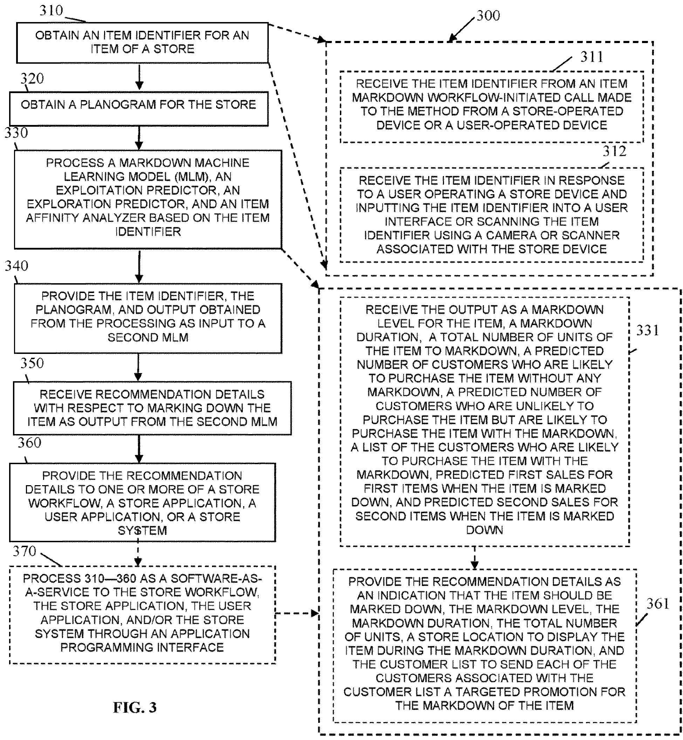

The above-referenced embodiments and other embodiments will now be discussed with reference to FIGS. 2A, 2B, and 3. FIGS. 2A and 2B illustrate a flow diagram of a method 200 for optimizing item markdowns to reduce loss of perishable items while maximizing overall item sales, according to an example embodiment. The software module(s) that implements the method 200 is referred to as a "store-based item markdown optimizer." The store-based item markdown optimizer is implemented as executable instructions programmed and residing within memory and/or a non-transitory computer-readable (processor-readable) storage medium and executed by one or more processors of one or more devices. The processor(s) of the device(s) that executes the store-based item markdown optimizer are specifically configured and programmed to process store-based item markdown optimizer. The store-based item markdown optimizer has access to one or more network connections during its processing. The connections can be wired, wireless, or a combination thereof.

In an embodiment, the device that executes store-based item markdown optimizer is cloud 110. In an embodiment, the device that executes store-based item markdown optimizer is server 110. In an embodiment, the device that executes store-based item markdown optimizer is a retail server 130. In an embodiment, the store-based item markdown optimizer is all of, or some combination of 113, 114, 115, 116, 117 and/or 118. In an embodiment, the store-based item markdown optimizer is provided to a retail server 130, retail terminal 120, retail system 135, retail service, and/or a user-operated device 140 as a SaaS.

At 210 (shown in FIG. 2A), the store-based item markdown optimizer obtains an item identifier for an item as a candidate for an item markdown within a store. In an embodiment, at 211 (shown in FIG. 2A), the store-based item markdown optimizer receives the item identifier from a scan performed on a barcode for the item at the store or the store-based item markdown optimizer receives the item identifier as input received for a user at a user-operated device 120, 130, and/or 140.

At 220 (shown in FIG. 2A), the store-based item markdown optimizer provides the item identifier to an MLM 116. A trainer or the store-based item markdown optimizer can also provide with the item identifier the features from store data discussed above with system 100 in FIG. 1 as input to MLM 116.

At 230 (shown in FIG. 2A), the store-based item markdown optimizer receives a markdown level for the item and a total number of item units to markdown as output from the MLM 116. This occurs when MLM 116 determines based on the input features and the item identifier that the item should be or is to be marked down.

In an embodiment, at 231 (shown in FIG. 2B), the store-based item markdown optimizer obtains a markdown duration as an additional output from the MLM 116. The markdown duration is an optimal predicted period of time during which the item is to be marked down at the marked down level.

At 240 (shown in FIG. 2A), the store-based item markdown optimizer obtains a predicted number of future transactions that are likely to include the item without any markdown. This is provided as a total number of baskets where each basket represents a future transaction during which the item is predicted to be purchased without any provided markdown being associated with the item.

In an embodiment of 231 and 240, at 241 (shown in FIG. 2B), the store-based item markdown optimizer provides the item identifier, the markdown level, the total number of item units, and the markdown duration as input to an exploitation predictor 114. In response to that input, the store-based item markdown optimizer receives the predicted number of the future transactions as output from the exploitation predictor 114.

At 250 (shown in FIG. 2A), the store-based item markdown optimizer obtains a predicted number of customers for the future transactions who are not likely to purchase the item without the markdown but are likely to purchase the item with the item markdown. In an embodiment of 241 and 250, at 251 (shown in FIG. 2B), the store-based item markdown optimizer provides the item identifier, the markdown level, the total number of item units, and the markdown duration as input to an exploration predictor 113. In response, the store-based item markdown optimizer receives the predicted number of the customers who are not likely to purchase the item without the markdown but are likely to purchase the item with the markdown as output from the exploration predictor 113. In an embodiment of 251 and at 252 (shown in FIG. 2B), the store-based item markdown optimizer receives a customer list of customer identifiers associated with the customers as an additional output from the exploration predictor 113.

At 260 (shown in FIG. 2A), the store-based item markdown optimizer provides a recommendation with recommendation details as to whether to markdown the item based on the markdown level, and the predicted number of the future transactions likely to include the item without any markdown, the predicted number of the customers likely to purchase the item with the markdown. , the predicted number of the first sales, and the predicted number of the second sales. In an embodiment of 261 and 270, at 271 (shown in FIG. 2B), the store-based item markdown optimizer obtains a planogram for the store.

At 270 (shown in FIG. 2A), the store-based item markdown optimizer obtains a predicted number of first sales for second items when the item is purchased in the future transactions. Furthermore, the store-based item markdown optimizer obtains a predicted number of second sales for third items when the item is purchased in the future transaction. The store-based item markdown optimizer further provides the recommendation with recommendation details so as to include the predicted number of the first sales, and the predicted number of the second sales.

In an embodiment of 252 and 270, at 271 (shown in FIG. 2B), the store-based item markdown optimizer provides the item identifier, the markdown level, the total number of item units, and the markdown duration as input to an item affinity analyzer 115. In response, the store-based item markdown optimizer receives as output the first sales for the second items and the second sales for the third items. In an embodiment of 271 and at 272 (shown in FIG. 2B), the store-based item markdown optimizer obtains a planogram for the store

In an embodiment of 272 and at 273 (shown in FIG. 2B), the store-based item markdown optimizer provides the markdown level, the total number of item units, the markdown duration, the planogram, the predicted number of future transactions that are likely to include the item without the markdown, the predicted number of the customers who are likely to purchase the item with the item markdown, the predicted number of first sales, and the predicted number of second sales as input to a second MLM 117. In response, the store-based item markdown optimizer receives the recommendation and the recommendation details as output from the second MLM 117.

In an embodiment of 273 and at 274 (shown in FIG. 2B), the store-based item markdown optimizer identifies the recommendation as an indication to markdown the item, the markdown level, the markdown duration, a location to display the item within the store, and the customer list of identifiers from the recommendation details. The store-based item markdown optimizer provides the recommendation details in response to receiving the item identifier at 210.

In an embodiment, at 280 (shown in FIG. 2A), the store-based item markdown optimizer iterates to 210 for a next item identifier associated with a next item in a list of item identifiers received from the store until a last item identifier for a last item is processed by the store-based item markdown optimizer (e.g., 210-270). In an embodiment of 280 and at 281 (shown in FIG. 2A), the store-based item markdown optimizer generates a report that includes each item identifier, the corresponding recommendation, and the corresponding recommendation details. The store-based item markdown optimizer provides the report to a store application 124, a user application 143, a store manager 133, a store interface 134, and/or a store system 135

FIG. 3 is a flow diagram of another method 300 for optimizing item markdowns to reduce loss of perishable items while maximizing overall item sales, according to an example embodiment. The software module(s) that implements the method 300 is referred to as an "item markdown optimizer." The item markdown optimizer is implemented as executable instructions programmed and residing within memory and/or a non-transitory computer-readable (processor-readable) storage medium and executed by one or more processors of one or more devices. The processor(s) of the device(s) that executes the item markdown optimizer are specifically configured and programmed to process the item markdown optimizer. The item markdown optimizer has access to one or more network connections during its processing. The network connections can be wired, wireless, or a combination of wired and wireless.

In an embodiment, the device that executes the item markdown optimizer is cloud 110. In an embodiment, the device that executes the item markdown optimizer is server 110. In an embodiment, the device that executes the item markdown optimizer is retail server 130. In an embodiment, the item markdown optimizer is provided to a retail server 130, a retail terminal 120, a retail system 135, a retail service, and/or a user-operated device 140 as a SaaS.

In an embodiment, the item markdown optimizer is all of, or some combination of 113, 114, 115, 116, 117, 118, and/or method 200. The item markdown optimizer presents another and, in some ways, enhanced processing perspective from that which was discussed above with the method 200 and system 100.

At 310, the item markdown optimizer obtains an item identifier for an item of a store. In an embodiment, at 311, the item markdown optimizer receives the item identifier from an item markdown workflow-initiated call made to item markdown optimizer from a store-operated device 120, 130, and/or 140 or user-operated interface 124, 133, 134, 135, and/or 143. In an embodiment, at 312, the item markdown optimizer receives the item identifier in response to a user operating a store device and inputting the item identifier into a user interface or scanning the item identifier using a camera or a scanner associated with the store device.

At 320, the item markdown optimizer obtains a planogram for the store. The planogram identifies the location of store entry and exit points, shelves, aisles, departments, terminals, displays, and the locations of items within the departments, aisles, shelves, and displays.

At 330, the item markdown optimizer processes a markdown MLM 116, an exploitation predictor 114, an exploration predictor 113, and an item affinity analyzer 115 based and using at least the item identifier. In an embodiment, at 331, the item markdown optimizer receives the output from 113-116 as a markdown level, a total number of units of the item to markdown, a predicted number of customers who are likely to purchase the item without any markdown, a predicted number of customers who are likely to purchase the item with the markdown but were not likely to purchase the item without the markdown, a list of customers who are likely to purchase the item with the markdown, predicted sales of for fist items when the item is marked down, and predicted sales for second items when the item is marked down.

At 340, the item markdown optimizer provides the item identifier, the planogram, and the output obtained from 330 as input to a second MLM 116. At 350, the item markdown optimizer receives recommendation details with respect to marking down the item as output from the second MLM 116.

At 360, the item markdown optimizer provides the recommendation details to one or more of a store workflow, a store application 123, a user application 143, and a store system 135. The recommendation details are integrated into store operations.

In an embodiment of 331 and 360, at 361, the item markdown optimizer provides the recommendation details as an indication that the item should be marked down, the markdown level, the markdown duration, the total number of units, a store location to display the item during the markdown duration, and the customer list to send each of the customers associated with the customer list a targeted promotion for the markdown of the item. This is a fine-grained level of detail recommendation that optimizes overall store sales when the item is to be markdown and eliminates reliance on the experience and intuition of store personnel.

In an embodiment, at 370, the item markdown optimizer associated with 310-360 is processed from a cloud and provided to a store workflow, the store application 123, the user application 143, and the store system 135 as a software-as-a-service through an API. The item markdown optimizer is invoked via an API call from the workflow, application 123, application 143, and system 135.

The above description is illustrative, and not restrictive. Many other embodiments will be apparent to those of skill in the art upon reviewing the above description. The scope of embodiments should therefore be determined with reference to the appended claims, along with the full scope of equivalents to which such claims are entitled.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus, the following claims are hereby incorporated into the Description of the Embodiments, with each claim standing on its own as a separate exemplary embodiment.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed. The reader's attention is directed to all papers and documents which are filed concurrently with or previous to this specification in connection with this application and which are open to public inspection with this specification, and the contents of all such papers and documents are incorporated herein by reference.

## Claims

1. A method, comprising:
obtaining an item identifier for an item that is a candidate for an item markdown within a store;
providing the item identifier to a machine-learning model (MLM);
receiving a markdown level for the item and a total number of units of the item to markdown as output from the MLM based on the MLM determining that the item is to be marked down;
obtaining a predicted number of future transactions that are likely to include the item without any markdown of the item;
obtaining a predicted number of customers for the future transactions who are not likely to purchase the item without the markdown but who are likely to purchase the item with the item markdown; and
providing a recommendation with recommendation details as to whether to markdown the item based on the markdown level, the total number of item units, and the predicted number of the future transactions likely to include the item without any markdown.

2. The method of claim 1 further comprising:
obtaining a predicted number of first sales for one or more second items when the item is purchased in the future transactions and a predicted number of second sales for one or more third items when the item is purchased in the future transactions; and
providing the recommendation with recommendation details the predicted number of the customers likely to purchase the item with the markdown, the predicted number of the first sales, and the predicted number of the second sales.

3. The method of claim 1 further comprising, iterating to the obtaining for a next item identifier associated with a next item in a list of item identifiers received from the store until a last item identifier for a last item is processed by the method and optionally iterating further includes generating a report that includes each item identifier, the corresponding recommendation, and the corresponding recommendation details.

4. The method of claim 1, wherein obtaining the item identifier further includes receiving the item identifier from a scan performed on a barcode for the item at the store or receiving the item identifier as input received from a user at a user-operated device.

5. The method of claim 2, wherein receiving further includes obtaining a markdown duration as additional output from the MLM.

6. The method of claim 5, wherein obtaining the predicted number of the future transactions that are likely to include the item without any markdown further includes providing the item identifier, the markdown level, the total number of item units, and the markdown duration as input to an exploitation predictor and receiving the predicted number of the future transactions as output from the exploitation predictor.

7. The method of claim 6, wherein obtaining the predicted number of the customers further includes providing the item identifier, the markdown level, the total number of item units, and the markdown duration as input to an exploration predictor and receiving the predicted number of the customers as output from the exploration predictor.

8. The method of claim 7, wherein providing the item identifier to the exploration predictor further includes receiving a customer list of customer identifiers associated with the customers as additional output from the exploration predictor.

9. The method of claim 8, wherein obtaining the predicted number of the first sales further includes providing the item identifier, the markdown level, the total number of item units, and the markdown duration as input to an item affinity analyzer and receiving as output the first sales for the second items and the second sales for the third items.

10. The method of claim 9, wherein providing the recommendation further includes obtaining a planogram for the store and optionally providing the recommendation further includes providing the markdown level, the total number of item units, the markdown duration, the planogram, the predicted number of the future transaction that are likely to include the item without the markdown, the predicted number of the customers, the predicted number of the first sales, and the predicted number of the second sales as input to a second MLM and receiving the recommendation and recommendation details as output from the second MLM.

11. A method, comprising:
obtaining an item identifier for an item of a store;
obtaining a planogram for the store;
processing a markdown machine learning model (MLM), an exploitation predictor, an exploration predictor, and an item affinity analyzer based on the item identifier;
providing the item identifier, the planogram, and output obtained from the processing as input to a second MLM;
receiving recommendation details with respect to marking down the item as output from the second MLM; and
providing the recommendation details to one or more of a store workflow, a store application, a user application, or a store system.

12. The method of claim 11, wherein obtaining the item identifier further includes receiving the item identifier from an item markdown workflow-initiated call made to the method from a store-operated device or a user-operated device.

13. The method of claim 11, wherein obtaining the item identifier further includes receiving the item identifier in response to a user operating a store device and inputting the item identifier into a user interface or scanning the item identifier using a camera or scanner associated with the store device.

14. The method of claim 11, wherein processing further includes receiving the output as a markdown level for the item, a markdown duration, a total number of units of the item to markdown, a predicted number of customers who are likely to purchase the item without any markdown, a predicted number of customers who are unlikely to purchase the item but are likely to purchase the item with the markdown, a list of the customers who are likely to purchase the item with the markdown, predicted first sales for first items when the item is marked down, and predicted second sales for second items when the item is marked down and optionally providing the recommendation details further includes providing the recommendation details as an indication that the item should be marked down, the markdown level, the markdown duration, the total number of units, a store location to display the item during the markdown duration, and the customer list to send each of the customers associated with the customer list a targeted promotion for the markdown of the item.

15. A system, comprising:
a cloud server comprising at least one processor and a non-transitory computer-readable storage medium,
the non-transitory computer-readable storage medium comprising executable instructions,
wherein the executable instructions, when executed by the at least one processor cause the at least one processor to perform operations comprising:
obtaining an item identifier for an item of a store to determine whether the item should be marked down in price;
processing a markdown machine learning model (MLM), an exploitation predictor, an exploration predictor, and an item affinity analyzer based on the item identifier;
providing output from the processing as input to a second MLM;
receiving as output from the second MLM recommendation details for the item, wherein the recommendation details comprising an indication that the item should be marked down, a markdown level for the item, a total number of item units to markdown, a markdown duration, and a store location to display the item during the markdown duration, wherein receiving further include optionally receiving with the output a customer list of customer identifiers who are likely to purchase the item marked down when provided a targeted promotion for the markdown level on the item; and
integrating the recommendation details into an item markdown workflow associated with store interfaces, applications, and systems.

## Amended claims

### Amended claims in accordance with Rule 137(2) EPC.

1. A method (200), comprising:
obtaining an item identifier for an item that is a candidate for an item markdown within a store (210);
providing the item identifier to a machine-learning model (MLM) (220);
receiving a markdown level for the item and a total number of units of the item to markdown as output from the MLM based on the MLM determining that the item is to be marked down (230);
obtaining a predicted number of future transactions that are likely to include the item without any markdown of the item (240);
obtaining a predicted number of customers for the future transactions who are not likely to purchase the item without the markdown but who are likely to purchase the item with the item markdown (250); and
providing a recommendation with recommendation details as to whether to markdown the item based on the markdown level, the total number of item units, and the predicted number of the future transactions likely to include the item without any markdown (260).

2. The method of claim 1 further comprising:
obtaining a predicted number of first sales for one or more second items when the item is purchased in the future transactions and a predicted number of second sales for one or more third items when the item is purchased in the future transactions; and
providing the recommendation with recommendation details the predicted number of the customers likely to purchase the item with the markdown, the predicted number of the first sales, and the predicted number of the second sales (270).

3. The method of claim 1 further comprising, iterating to the obtaining for a next item identifier associated with a next item in a list of item identifiers received from the store until a last item identifier for a last item is processed by the method (280) and optionally iterating further includes generating a report that includes each item identifier, the corresponding recommendation, and the corresponding recommendation details (281).

4. The method of claim 1, wherein obtaining the item identifier further includes receiving the item identifier from a scan performed on a barcode for the item at the store or receiving the item identifier as input received from a user at a user-operated device (211).

5. The method of claim 2, wherein receiving further includes obtaining a markdown duration as additional output from the MLM (231).

6. The method of claim 5, wherein obtaining the predicted number of the future transactions that are likely to include the item without any markdown further includes providing the item identifier, the markdown level, the total number of item units, and the markdown duration as input to an exploitation predictor and receiving the predicted number of the future transactions as output from the exploitation predictor (241).

7. The method of claim 6, wherein obtaining the predicted number of the customers further includes providing the item identifier, the markdown level, the total number of item units, and the markdown duration as input to an exploration predictor and receiving the predicted number of the customers as output from the exploration predictor (251).

8. The method of claim 7, wherein providing the item identifier to the exploration predictor further includes receiving a customer list of customer identifiers associated with the customers as additional output from the exploration predictor (252).

9. The method of claim 8, wherein obtaining the predicted number of the first sales further includes providing the item identifier, the markdown level, the total number of item units, and the markdown duration as input to an item affinity analyzer and receiving as output the first sales for the second items and the second sales for the third items (271).

10. The method of claim 9, wherein providing the recommendation further includes obtaining a planogram for the store (272) and optionally providing the recommendation further includes providing the markdown level, the total number of item units, the markdown duration, the planogram, the predicted number of the future transaction that are likely to include the item without the markdown, the predicted number of the customers, the predicted number of the first sales, and the predicted number of the second sales as input to a second MLM and receiving the recommendation and recommendation details as output from the second MLM (273).

11. The method of claim 1, further comprising:
obtaining a planogram for the store (320);
processing the markdown machine learning model (MLM), an exploitation predictor, an exploration predictor, and an item affinity analyzer based on the item identifier (330);
providing the item identifier, the planogram, and output obtained from the processing as input to a second MLM (340);
receiving the recommendation details with respect to marking down the item as output from the second MLM (350); and
providing the recommendation details to one or more of a store workflow, a store application, a user application, or a store system (360).

12. The method of claim 11, wherein obtaining the item identifier further includes receiving the item identifier from an item markdown workflowinitiated call made to the method from a store-operated device or a user-operated device (311).

13. The method of claim 11, wherein obtaining the item identifier further includes receiving the item identifier in response to a user operating a store device and inputting the item identifier into a user interface or scanning the item identifier using a camera or scanner associated with the store device (312).

14. The method of claim 11, wherein processing further includes receiving the output as a markdown level for the item, a markdown duration, a total number of units of the item to markdown, a predicted number of customers who are likely to purchase the item without any markdown, a predicted number of customers who are unlikely to purchase the item but are likely to purchase the item with the markdown, a list of the customers who are likely to purchase the item with the markdown, predicted first sales for first items when the item is marked down, and predicted second sales for second items when the item is marked down (331) and optionally providing the recommendation details further includes providing the recommendation details as an indication that the item should be marked down, the markdown level, the markdown duration, the total number of units, a store location to display the item during the markdown duration, and the customer list to send each of the customers associated with the customer list a targeted promotion for the markdown of the item (361).

15. A system (100), comprising:
a cloud server (110) comprising at least one processor and a non-transitory computer-readable storage medium,
the non-transitory computer-readable storage medium comprising executable instructions,
wherein the executable instructions, when executed by the at least one processor cause the at least one processor to perform operations comprising:
obtaining an item identifier for an item of a store to determine whether the item should be marked down in price;
processing a markdown machine learning model (MLM), an exploitation predictor, an exploration predictor, and an item affinity analyzer based on the item identifier;
providing output from the processing as input to a second MLM;
receiving as output from the second MLM recommendation details for the item, wherein the recommendation details comprising an indication that the item should be marked down, a markdown level for the item, a total number of item units to markdown, a markdown duration, and a store location to display the item during the markdown duration, wherein receiving further include optionally receiving with the output a customer list of customer identifiers who are likely to purchase the item marked down when provided a targeted promotion for the markdown level on the item; and
integrating the recommendation details into an item markdown workflow associated with store interfaces, applications, and systems.
